# Europäisches Patentamt

# European Patent Office

# Office européen des brevets

(19)

(11) Publication number: **0 198 006**
**B1**

(12)

# EUROPEAN PATENT SPECIFICATION

(45) Date of publication of patent specification: **15.03.89**

(21) Application number: **85905125.2**

(22) Date of filing: **01.10.85**

(86) International application number:
**PCT/SE85/00378**

(87) International publication number:
**WO 86/02281 24.04.86 Gazette 86/09**

(51) Int. Cl.⁴: **B 01 D 1/30,** B 01 J 4/00,
F 16 K 11/07

(54) INLET DEVICE IN A PLATE EVAPORATOR.

(30) Priority: **10.10.84 SE 8405056**

(43) Date of publication of application:
**22.10.86 Bulletin 86/43**

(45) Publication of the grant of the patent:
**15.03.89 Bulletin 89/11**

(84) Designated Contracting States:
**AT BE CH DE FR GB IT LI LU NL SE**

(56) References cited:
**EP-A-0 009 257**

(73) Proprietor: **ALFA-LAVAL FOOD & DAIRY
ENGINEERING AB
Bryggaregatan 23 P.O. Box 1008
S-221 03 Lund (SE)**

(72) Inventor: **BOLMSTEDT, Ulf
Domarringen 32
S-245 00 Staffanstorp (SE)**
Inventor: **JOHANSSON, Björn-Olow
Kryssaregatan 2
S-234 00 Lomma (SE)**

(74) Representative: **Lerwill, John et al
A.A. Thornton & Co. Northumberland House
303-306 High Holborn
London, WC1V 7LE (GB)**

Courier Press, Leamington Spa, England.

EP 0 198 006 B1

# Description

The present invention relates to plate evaporators.

A known form of plate evaporator includes a package of heat exchange plates having through openings aligned with each other and forming an inlet passage through the plate package for a liquid to be evaporated to enter and flow downwards through every second plate interspace, inlet means being provided at one side of the plate package for the supply of said liquid to the inlet passage. The inlet passage communicates with the plate interspaces through small distribution holes formed in gaskets or other members, which are clamped between the plates and extend around the inlet passage. To enable assembly of the plate evaporator, each of these members has to be attached in some way to one of the two plates between which it is to seal.

An inlet arrangement of the above form has, among other things, the essential drawback that the whole plate package of the evaporator has to be disassembled when the inlet assembly is to be inspected or said holes are to be cleaned after having become clogged. Another drawback is the great cost arising due to the need to attach the gaskets or other sealing members to the separate heat exchange plates.

The present invention has for its aim to provide a plate evaporator having an inlet arrangement of simple design which at least alleviates the drawbacks of the known arrangement as described above.

According to the present invention there is provided a plate evaporator comprising a package of heat exchange plates having through openings aligned with each other and forming an inlet passage through the plate package for a liquid to be evaporated, and inlet means provided at one side of the plate package for supply of said liquid to the inlet passage, the inlet passage communicating through distribution holes, with alternate plate interspaces formed between the plates for said liquid to enter said interspaces and to be evaporated while flowing downwardly therethrough, characterized in that a tube is removably inserted into the plate package and extends through the openings of the plates, the interior of the tube forms said inlet passage, and the tube is provided with holes constituting said distribution holes.

With a plate evaporator according to the invention, the tube may be removed from the plate package, without the latter having to be disassembled, to allow any required measure concerning the distribution holes, e.g. inspection and/or cleaning to be carried out. Possibly, a new tube with holes of a different size may be inserted into the package to replace the tube removed. Alternatively, nozzles with a desired opening size may be mounted in the holes. A change in the size of the distribution holes may be wanted, for example upon a change from one evaporation liquid to another, or for cleaning the plate evaporator.

According to a preferred embodiment of the invention the tube is inserted into the plate package from the side remote from the inlet means. Hereby, it will be possible to remove the perforated tube without disconnecting a supply conduit connected to the inlet means.

Advantageously, the tube has such a length and such a number of holes that it can be used in plate packages of different sizes. In a particular assembly, the part of the interior of the tube forming the inlet passage in the plate package, is separated from the other part of the tube interior by a piston, which is inserted into the tube from the side of the plate package remote from the inlet means.

According to a further development of the invention a piston as just described may be used for closing some of the evaporation interspaces of the plate package from communication with the inlet passage. In other words, the capacity of the plate evaporator may be changed in a simple manner without disassembling of the plate package. Such a change of the capacity of the plate evaporator may be performed automatically by axial displacement of the piston by means of equipment arranged to be controlled in dependence upon signals produced by a sensing member of some kind.

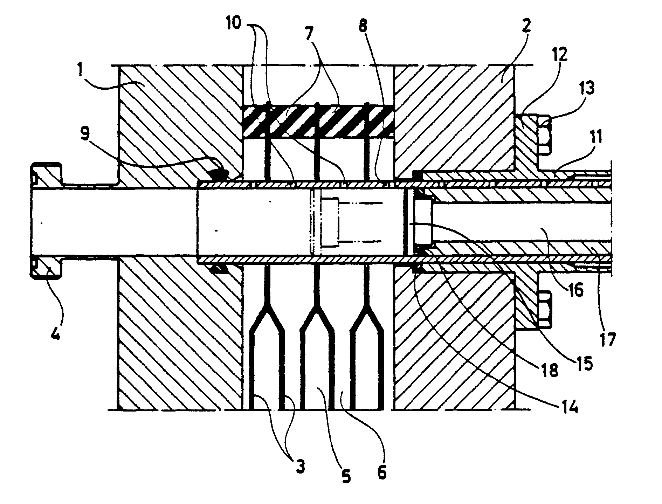

The invention is described in more detail below with reference to the accompanying drawing, which shows a section through the upper part of a plate evaporator according to the invention.

The drawing shows the upper parts of two frame plates 1 and 2, between which there are held together a number of heat exchange plates 3. The frame plates as well as the heat exchange plates have through holes aligned with each other. The frame plate 1 is provided with an inlet means 4 aligned with the through hole for the supply of liquid to be evaporated.

The heat exchange plates 3 are united in pairs, for instance by welding, around the above mentioned holes therein. Between the united plates of each pair there is formed an interspace 5 intended for the through flow of a heating medium, for instance steam. (The inlets and outlets of the interspaces 5 for the heating medium are not shown in the drawing.)

Between adjacent pairs of united plates there are formed interspaces 6 for receiving liquid to be evaporated.

The plates of each said pair, being united around said holes, are also united along their top edges, as can be seen from the drawing. Along the same edges gaskets are provided to seal adjacent pairs of united plates.

Into and through the hole in the frame plate 2 extends a tube 8. This tube extends through the holes in all of the heat exchange plates 3 terminating at the frame plate 1, against which its outer surface is sealed by an annular gasket 9. The tube 8 has several holes 10, some of which are situated opposite to the plate interspaces 6 intended to receive liquid to be evaporated. Thus, the holes 10 in the tube 8 form inlets for liquid to be evaporated to enter the plate interspaces 6. The outlets from the plate interspaces 6 may be of conventional form and are not shown in the drawing.

The perforated tube 8 is surrounded by a sleeve 11, which has a flange 12 connected to the frame plate 2 by means of screws 13. Between one end of the sleeve 11 and a shoulder in the frame plate 2 there is provided an annular gasket 14, which is adapted upon axial compression to expand radially for sealing between the frame plate 2 and the tube 8.

Within the tube 8 there is a piston 15, which is inserted through the end of the tube 8 not shown in the drawing. The piston 15 is connected with a piston-rod 16, which is surrounded by a sleeve 17 within the tube 8. Between the piston 15 and the adjacent end of the sleeve 17 there is provided an annular gasket 18, which is adapted upon axial compression to expand radially for sealing between the piston-rod 16 and the tube 8.

By dash-dotted lines the piston 15 is shown in an alternative position in the tube 8, from which it can be seen that a desirable number of passages 6 can be closed from communication with that part of the interior of the tube 8, which communicates with the inlet means 4 for the supply of liquid to be evaporated.

A plate evaporator may be provided with any desirable number of inlet arrangements as described above. For instance, a plate evaporator may have two or three inlets coupled in parallel and situated on the same level at the upper part of the plate package.

In the drawing the distribution holes 10 of the tube 8 are shown directed upwards. Such an arrangement is preferable for achieving the best possible distribution of the evaporation liquid in the plate interspaces 6 at the uppermost part of the plate package. If specially designed nozzles are inserted into the holes 10, a required distribution of the evaporating liquid may be achieved even if the holes are directed downwards. Especially during cleaning of the plate evaporator, an arrangement as shown in the drawing is preferable.

**Claims**

1. An evaporator comprising a package of heat exchange plates (3) having through openings aligned with each other and forming an inlet passage through the plate package for a liquid to be evaporated, and inlet means (4) provided at one side of the plate package for supply of said liquid to the inlet passage, the inlet passage communicating through distribution holes with alternate plate interspaces (6) formed between the plates for said liquid to enter said interspaces and to be evaporated while flowing downwardly therethrough, characterized in that a tube (8) is removably inserted into the plate package and extends through the openings of the plates, the interior of the tube (8) forms said inlet passage, and the tube (8) is provided with holes (10) constituting said distribution holes.

2. A plate evaporator according to claim 1, wherein the tube (8) is inserted into the plate package from the side remote from the inlet means (4).

3. A plate evaporator according to claim 2, wherein the tube (8) is provided with holes (10) over a length thereof to enable said tube to be used in another plate evaporator with a greater number of plate interspaces (6) than in said plate package, a part of the tube interior forming the inlet passage being separated from the other part of the tube interior by a piston (15) inserted into the tube (8) from the side of the plate package remote from the inlet means.

4. A plate evaporator according to claim 2, wherein a piston (15) is inserted into the tube (8) from the side of the plate package, remote from the inlet means and closes the inlet passage from communication with at least one distribution hole (10) communicating with a plate interspaces (6) available for but not required for evaporation.

5. A method of using an inlet device in a plate evaporator according to claim 4, characterized in that the piston (15) is adjusted to change of the capacity of the plate evaporator by being brought to close communication between the inlet passage and more or less of the plate interspaces (6).

**Patentansprüche**

1. Verdampfer mit einem Paket Wärmeaustauschplatten (3) mit fluchtenden Durchgangsöffnungen, die einen durch das Plattenpaket verlaufenden Einlaßkanal für eine zu verdampfende Flüssigkeit bilden, und einer Einlaßeinrichtung (4) auf eine Seite des Plattenpakets zur Zufuhr der Flüssigkeit zum Einlaßkanal, wobei der Einlaßkanal durch Verteilerlöcher mit zwischen den Platten gebildeten, abwechselnd angeordneten Plattenzwischenräumen (6) in Strömungsverbindung steht, damit die Flüssigkeit in die Zwischenräume eintreten und verdampft werden kann, während sie in ihnen abwärts strömt, dadurch gekennzeichnet, daß ein Rohr (8) herausnehmbar in das Plattenpaket eingesetzt ist und durch die Öffnungen in den Platten verläuft, daß das Innere des Rohrs (8) den Einlaßkanal bildet und daß das Rohr (8) mit Löchern (10) versehen ist, die die Verteilerlöcher bilden.

2. Plattenverdampfer nach Anspruch 1, bei dem das Rohr (8) in das Plattenpaket von der von der Einlaßeinrichtung (4) abgewandten Seite her in das Plattenpaket eingesetzt ist.

3. Plattenverdampfer nach Anspruch 2, bei dem das Rohr (8) mit Löchern (10) über eine solche Länge versehen ist, daß das Rohr in einem anderen Plattenverdampfer mit einer größeren Anzahl von Plattenzwischenräumen (6) als in dem Plattenpaket verwendet werden kann, wobei ein Teil des Rohrinneren, das den Einlaßkanal bildet, vom anderen Teil des Rohrinneren durch einen Kolben (15) getrennt ist, der von der von der Einlaßeinrichtung abgewandten Seite des Plattenpakets her in das Rohr (8) eingesetzt ist.

4. Plattenverdampfer nach Anspruch 2, bei der ein Kolben (15) in das Rohr (8) von der von der Einlaßeinrichtung abgewandten Seite her in das Rohr (8) eingesetzt ist und den Einlaßkanal gegen mindestens ein Verteilerloch (10) sperrt, das mit einem Plattenzwischenraum (6) in Verbindung steht, der zum Verdampfen verfügbar ist, aber nicht dafür gebraucht wird.

5. Verfahren zur Verwendung einer einlaßeinrichtung in einem Plattenverdampfer nach Anspruch 4, dadurch gekennzeichnet, daß der Kolben (15) auf eine Änderung der Kapazität des Plattenaustauschers eingestellt wird, indem man ihn in enge Verbindung mit dem Einlaßkanal und einer größeren oder kleineren Anzahl der Plattenzwischenräume bringt.

**Revendications**

1. Evaporateur comprenant un ensemble ou paquet de plaques d'échange de chaleur (3) munies d'ouvertures traversantes alignées entre elles et formant un passage d'admission à travers l'ensemble de plaques pour un liquide à évaporer, et des moyens d'admission (4) prévus sur un côté de l'ensemble de plaques pour l'alimentation du liquide dans le passage d'admission, le passage d'admission communiquant par des trous de répartition avec des espaces intermédiaires de plaques alternées (6) formés entre les plaques pour permettre au liquide de pénétrer dans les espaces intermédiaires et de s'évaporer tout en s'écoulant vers le bas à travers ceux-ci, caractérisé en ce qu'un tube (8) est inséré de façon amovible dans l'ensemble de plaques et s'étend à travers les ouvertures des plaques, l'intérieur du tube (8) forme le passage d'admission, et le tube (8) est muni de trous (10) constituant lesdits trous de répartition.

2. Evaporateur à plaques selon la revendication 1, dans lequel le tube (8) est inséré dans l'ensemble de plaques depuis le côté opposé au moyen d'admission (4).

3. Evaporateur à plaques selon la revendication 2, dans lequel le tube (8) est muni de trous (10) sur sa longueur pour permettre l'utilisation du tube dans un autre évaporateur à plaques comportant un plus grand nombre d'espaces intermédiaires de plaques (6) que dans ledit ensemble de plaques, une partie de l'intérieur du tube formant le passage d'admission étant séparée de l'autre partie de l'intérieur du tube par un piston (15) inséré dans le tube (8) depuis le côté de l'ensemble de plaques opposé au moyen d'admission.

4. Evaporateur à plaques selon la revendication 2, dans lequel un piston (15) est inséré dans le tube (8) depuis le côté de l'ensemble de plaques, opposé au moyen d'admission et ferme le passage d'admission à la communication avec au moins un trou de répartition (10) communiquant avec un espace intermédiaire de plaques (6) disponible mais non nécessaire pour l'évaporation.

5. Procédé d'utilisation d'un dispositif d'admission dans un évaporateur à plaques selon la revendication 4, caractérisé en ce que le piston (15) est réglé pour modifier la capacité de l'évaporateur à plaques en étant amené en position pour permettre la communication entre le passage d'admission et un nombre plus ou moins élevé des espaces intermédiaires de plaques (6).